# EUROPEAN PATENT APPLICATION

(11) **EP 2 589 298 A1**
(43) Date of publication of application: **08.05.2013**
(21) Application number: 11801021.4
(22) Date of filing: 28.06.2011
(51) Int. Cl.: A23L 1/176

(54) **METHOD FOR PRODUCING NON-FRIED FOOD**

(30) Priority: 30.06.2010 JP 2010148555
(71) Applicant: Ajinomoto Co., Inc., Tokyo 104-8315 (JP)
(72) Inventor: MATSUURA, Yoshiki, Oura-gun Gunma 370-0523 (JP); SASAKI, Shinji, Oura-gun Gunma 370-0523 (JP); KIMURA, Junpei, Oura-gun Gunma 370-0523 (JP)
(74) Representative: Strehl Schübel-Hopf & Partner
(86) International application number: PCT/JP2011/065246
(87) International publication number: WO 2012/002559

(57) **Abstract**

[Object]

To provide a method for producing a low-calorie non-fried food, which achieves both of the crispness of a coating and the deliciousness of a content ingredient by providing a coating composition (a batter liquid and bread crumbs) suitable for producing a fried food-like food by superheated steam heating.

[Means for Resolution]

A method for producing a non-fried food, in which a batter liquid and bread crumbs are applied in this order to a food material having undergone a moist-heat treatment, and then the food material is heated by superheated steam at 230 to 250°C, characterized in that a water content in a coating composition (the batter liquid and the bread crumbs) before heating is maintained at 33% by weight or less.

## Description

### [Technical Field]

The present invention relates to a method for producing a non-fried food obtained by superheated steam cooking, more particularly relates to a method for producing a non-fried food which is delicious and has crispness in a coating although having a low oil content.

### [Background Art]

As the population is aging and health consciousness is increasing, it has been demanded that the calories of industrially produced cooked foods should be reduced. Here, oil contained in fried foods contributes to deliciousness but is a factor of increasing calories. Therefore, the development of a method for producing a fried food which has a low oil content, i.e., a low calorie content has been demanded.

As a method for producing a non-fried food without deep frying, there has been proposed a processing method without frying in which a powdered oil or fat or liquid shortening is applied to a food material or a powdered oil or fat or liquid shortening is kneaded into a food material, and then, the food material is steam-heated by saturated steam at about 100°C, and then, further steam-heated by spraying steam onto the food material using low- or normal-pressure high-temperature superheated steam heated to 120°C to 600°C for 100 seconds to 18 minutes depending on the food material to be processed (Patent document 1). However, in the case where the method is applied to products whose surfaces are coated with a thick coating of bread crumbs such as fried cakes of minced meat, cream croquettes, and fried breaded pork cutlets, it was found that the method has problems as follows: it is difficult to perform a heating treatment uniformly throughout the inside of the food material, if a heating treatment time is prolonged, a food material is unevenly baked or the surface thereof is dried to give a dry texture, and if the food material is easy to crumble such as white fish fillet, the fillet crumbles or a crack is caused.

### [Prior Art Document]

### [Patent Document]

[Patent document 1] JP-A-11-178513

### [Summary of the Invention]

### [Problems that the Invention is to Solve]

In the heating by superheated steam, when the temperature of a food surface is 100°C or lower, heat is transferred by the condensation of steam, and therefore, a water content in the whole food is increased by the generated condensed water. Thereafter, when the temperature of a food surface is increased to 100°C or higher, water begins to evaporate from the surface and drying proceeds, thereby decreasing a water content in the whole food. Therefore, when conventional batter liquid and bread crumbs are merely applied and superheated steam heating is performed, there are problems as follows. Due to a lot of water content, although the temperature of a center portion of a content ingredient is sufficiently increased, a coating is moist and does not have pleasant crispness or crunchiness, or on the other hand, if pleasant crispness or crunchiness is tried to be given to a coating, the temperature of a center portion of a content ingredient is increased too much, and therefore, taste is deteriorated. Accordingly, an object to be achieved by the invention is to provide a method for producing a low-calorie non-fried food, which achieves both of the crispness of a coating and the deliciousness of a content ingredient by providing a coating composition (a batter liquid and bread crumbs) suitable for producing a fried food-like food by superheated steam heating.

### [Means for Solving the Problems]

The present inventors made intensive studies in order to achieve the above object. As a result, a method for producing a cooked non-fried food-like food, which can be industrially continuously produced by applying a batter liquid and bread crumbs in this order to a food material (content ingredient) having undergone a moist-heat treatment, and then heating the food material using superheated steam, is characterized in that a water content in a coating composition (the batter liquid and the bread crumbs) before heating is maintained at 33% by weight (hereinafter, the term "% by weight" is simply referred to as "%") or less, preferably at 29% or less. Further, it is more preferred that a water content in the batter liquid is 63% or less, and a water content in the bread crumbs is 20% or less. A further more preferred embodiment is a formulation in which an oil or fat is added, and it is further more preferred that an oil or fat content is 30% or more. It is still further more preferred that a water content in the bread crumbs to be used is decreased by previously heating and drying the bread crumbs along with an oil or fat.

That is, a first aspect of the invention is a method for producing a non-fried food, in which a batter liquid and bread crumbs are applied in this order to a food material having undergone a moist-heat treatment, and then the food material is heated by superheated steam at 230 to 250°C, characterized in that a water content in a coating composition (the batter liquid and the bread crumbs) before heating is maintained at 33% or less, preferably at 29% or less.

A second aspect of the invention is characterized in that in the first aspect of the invention, a water content in the batter liquid is maintained at 63% or less and a water content in the bread crumbs is maintained at 20% or less.

A third aspect of the invention is the formulation of the batter liquid in the second aspect of the invention, wherein a water content in the batter liquid is maintained at 63% or less. A more preferred embodiment is a formulation in which an oil or fat is added, and it is more preferred that an oil or fat content is 30% or more.

A fourth aspect of the invention is a method for preparing the bread crumbs in the second aspect of the invention and is characterized in that the water content in the bread crumbs has been decreased to 20% or less by previously heating and drying the bread crumbs along with an oil or fat.

### [Advantage of the Invention]

A non-fried food produced by the method according to the invention is delicious and maintains crispness in a coating although having a low oil content. Further, a heating treatment is performed uniformly throughout the inside of the food material (content ingredient), and even if the food material is white fish fillet, a product in which the fillet does not crumble or a crack is not caused can be produced.

### [Mode for Carrying Out the Invention]

The food material (content ingredient) to be used in the invention may be any as long as it is a material usually known as a fried product, and examples thereof include pork meat for used in fried breaded pork cutlets, steamed and mashed potato for used in croquettes, minced meat for use in fried cakes of minced meat, and fish fillet or ground fish meat for use in fried fish.

Such a content ingredient is subjected to moist-heat cooking using steam and is heated until the temperature of a center portion thereof reaches 55 to 60°C.
The conditions for this heating vary depending on the food material and can be appropriately selected, however, in consideration of the subsequent superheated steam heating, the heating is preferably performed to such an extent that the food material can be eaten. When the content ingredient is subjected to moist-heat cooking, the content ingredient can also be coated previously with a sprinkling flour such as wheat flour or starch.

The content ingredient having undergone moist-heat cooking is coated with a batter liquid containing wheat flour as a main ingredient, and then, bread crumbs are applied to the outer surface thereof. Incidentally, the content ingredient may be coated with a sprinkling flour such as wheat flour or starch before it is coated with the batter liquid.

Here, the batter liquid and the bread crumbs which are materials for forming the coating to be used in the invention are characterized in that the total water content therein is 33% or less although it depends on the respective blending amounts (application amounts) thereof. The water content therein is more preferably 29% or less. If it exceeds 33%, a texture balance between the content ingredient and the coating is deteriorated to impair the taste.

Ingredients of the batter liquid are not particularly limited, and for example, wheat flour, starch, a modified starch or a degradation product thereof, a ground cereal product, dietary fibers, an animal or vegetable protein, a sugar, an emulsifier, etc., salt, a herb, a spice, etc., an oil or fat, etc. , can be appropriately selected. A method for producing the batter liquid is not particularly limited as long as it is a commonly used method, however, in one example, to a solution obtained by mixing water and solid materials, an oil or fat is added while stirring the solution using a high-speed stirrer, whereby a batter liquid in the form of an emulsion is obtained. In the case where an oil or fat is added, an oil or fat content in the batter liquid is preferably from 20 to 60%. It is only necessary that a water content in a coating composition when bread crumbs are added and mixed with the batter liquid be 33% or less by setting a water content in the batter liquid alone to 30 to 63%.

Similarly, as the bread crumbs, either of an electrode type product and a roasting type product may be used, and a product prepared such that a water content therein is from 2 to 20% or less is preferably used. As such bread crumbs, semi-dry bread crumbs (water content: 20%) or dry bread crumbs (water content: 8%), both of which are in the marketplace, can be used, however, it is more preferred that oil- or fat-containing bread crumbs prepared by heating such bread crumbs along with salad oil at 180°C and adjusting a water content therein to 2% or less are used.

The thus obtained batter liquid and bread crumbs are applied to the content ingredient, preferably the batter liquid and bread crumbs are mixed such that the weight ratio of the bread crumbs to the batter is from 0.5 to 2.5, and the content ingredient coated with the coating composition (the batter liquid and the bread crumbs) is obtained and subjected to superheated steam heating, in which the temperature is adjusted to 230 to 250°C. A treatment time varies depending on the size of the food material to undergo the heating, but usually from 2 to 4 minutes. One feature of the invention resides in that the coating composition having a water content of 33% or less is subjected to superheated steam heating at 230 to 250°C, and therefore, the crispness of the coating can be achieved even in a non-fried food.

The obtained fried food-like food may be served to eat as such or distributed as a chilled food, however, from an industrial point of view, it is also possible to distribute the fried food-like food as a frozen food by freezing the food in the same manner using an apparatus capable of the quick-freezing of the non-fried food.

### [Examples]

Hereinafter, the invention will be described with reference to Examples and Comparative Examples. In the Examples, the symbol "%" refers to "% by weight".

### [Examples 1 and 2] [Comparative Examples 1 to 7]

A material obtained by steaming 10 g of ground fish meat followed by gelatinization was used as a content ingredient. To the content ingredient, weak flour (wheat flour) manufactured by Nisshin Flour Milling Inc. was applied as a sprinkling flour. Then, 3 g of a batter liquid and 3 g of bread crumbs, in each of which a water content was adjusted as shown in Table 1 or 2 (in the case of the batter liquid, adjusted by the formulation of the batter, and in the case of the bread crumbs, adjusted by heating and drying moist bread crumbs) were applied thereto. After applying the coating, heating was performed for 3 minutes using a superheated steam heater set at a temperature of 250°C. After freezing, the food was stored in a freezer at -18°C for 7 days, and thereafter thawed using a microwave. Then, a sensory evaluation for the texture of the coating was carried out. In the sensory evaluation, the texture of the coating was evaluated according to the following criteria. As for the numerical values regarding the evaluation for the texture of the coating, a food which had most crispness was scored 9 points, and a food which had least crispness was scored 1 point, and then, an average value of the scores given by 20 panelists was calculated. The results are shown in Table 3.

**[Table 1] Batter liquid used**

| | Formulation of batter | Reference document | Water content (%) |
|---|---|---|---|
| A | Wheat flour : water = 1:1 | None | 50.0 |
| B | Beaten egg | JP-A-2006-149207 | 76.0 |
| C | Wheat flour : water =1:1.8 | JP-A-11-178513 | 64.3 |
| | | JP-A-2000-139366 | |

**[Table 2] Bread crumbs used**

| | Bread crumbs | Water content (%) |
|---|---|---|
| A' | Dry bread crumbs | 8.0 |
| B' | Dry bread crumbs | 15.0 |
| C' | Moist bread crumbs | 37.0 |

**[Table 3] Evaluation results of texture of coating**

| | Batter | Bread crumbs | Water content in coating composition (%) | Sensory evaluation | Remark |
|---|---|---|---|---|---|
| Example 1 | A | A' | 29.0 | 6.7 | The coating has very favorable crunchiness and a texture balance between the coating and the content ingredient is good. |
| Example 2 | A | B' | 32.5 | 6.3 | The coating has favorable crunchiness and a texture balance between the coating and the content ingredient is good. |
| Comparative Example 1 | A | C' | 36.2 | 5.1 | A texture balance between the coating and the content ingredient is slightly poor. |
| Comparative Example 2 | C | A' | 39.7 | 5.0 | ditto |
| Comparative Example 3 | B | A' | 42.0 | 4.7 | ditto |
| Comparative Example 4 | C | B' | 43.5 | 4.6 | ditto |
| Comparative Example 5 | B | B' | 45.5 | 4.4 | ditto |
| Comparative Example 6 | C | C' | 50.7 | 3.9 | ditto |
| Comparative Example 7 | B | C' | 56.5 | 3.3 | ditto |

From Table 3, favorable results were obtained when superheated steam heating was performed in the case where the water content in the coating composition (the batter liquid and the bread crumbs) was 33% or less, preferably 29% or less. A favorable texture could not be obtained unless the water content in the whole coating composition (the batter liquid and the bread crumbs) was 33% or less even if the water content in the batter liquid or the bread crumbs alone was low.

### [Example 3]

A material obtained by steaming 10 g of ground fish meat followed by gelatinization was used as a content ingredient. To the content ingredient, weak flour (wheat flour) manufactured by Nisshin Flour Milling Inc. was applied as a sprinkling flour. As for the coating, the amount of a batter liquid was fixed at 3 g, and the weight of bread crumbs was adjusted so that a water content in a coating composition (the batter liquid and the bread crumbs) was 33% or less, and the coating composition was applied thereto. The water content in each of the batter liquid and the bread crumbs was adjusted in the same manner as in Example 1. After applying the coating, heating was performed for 3 minutes using a superheated steam heater set at a temperature of 250°C. After freezing, the food was stored in a freezer at -18°C for 7 days, and thereafter thawed using a microwave. Then, a sensory evaluation for the texture of the coating was carried out. As for the numerical values regarding the evaluation for the texture of the coating, a food which had most crispness was scored 9 points, and a food which had least crispness was scored 1 point, and then, an average value of the scores given by 20 panelists was calculated.

**[Table 4] Adjustment of water content in coating composition (batter liquid and bread crumbs) to 33% and evaluation results of texture of coating**

| | | Batter liquid | | | |
|---|---|---|---|---|---|
| | Water content (%) | 45 | 50 | 63 | 76 |
| Bread crumbs | 2 | 6.8 | 6.8 | 6.4 | 5.8 |
| | 8 | 6.6 | 6.5 | 6.4 | 5.6 |
| | 15 | 6.4 | 6.3 | 6.1 | 5.7 |
| | 20 | 6.3 | 6.2 | 6.1 | |
| | 23 | 5.8 | 5.6 | | |
| | 27 | 5.6 | | | |

From Table 4, among the combinations of the batter liquid with the bread crumbs giving a water content of 33%, favorable results were obtained in the case where the water content in the batter liquid was 63% or less and the water content in the bread crumbs was 20% or less.

### [Examples 4 to 8] [Comparative Examples 8 and 9]

A material obtained by steaming 10 g of ground fish meat followed by gelatinization was used as a content ingredient. To the content ingredient, weak flour (wheat flour) manufactured by Nisshin Flour Milling Inc. was applied as a sprinkling flour. Then, 3 g of a batter liquid and 3 g of bread crumbs, in each of which a water content was adjusted as shown in Table 5 or 6 in the same manner as in Example 1, were applied thereto. After applying the coating, heating was performed for 3 minutes using a superheated steam heater set at a temperature of 250°C. After freezing, the food was stored in a freezer at -18°C for 7 days, and thereafter thawed using a microwave. Then, a sensory evaluation for the texture of the coating was carried out. As for the numerical values regarding the evaluation for the texture of the coating, a food which had most crispness was scored 9 points, and a food which had least crispness was scored 1 point, and then, an average value of the scores given by 20 panelists was calculated.
As the emulsifier, one manufactured by Mitsubishi-Kagaku Foods Corporation (S-1170) was used, and as the thickener, one manufactured by Dainippon Sumitomo Pharma Co. , Ltd. (ECHO GUM) was used.

**[Table 5] Batter liquid used**

| | Formulation of batter | Water content (%) |
|---|---|---|
| A | wheat flour : water =1:1 | 50.0 |
| B | Beaten egg | 76.0 |
| D | wheat flour : cornstarch : white egg powder: emulsifier : thickener: water = 20:28.3:1:0.5:0.2:50 | 50.0 |
| E | wheat flour : cornstarch : white egg powder : emulsifier : thickener : water : oil = 12:16.3:1:0.5:0.2:50:20 | 50.0 |
| F | wheat flour : cornstarch : white egg powder: emulsifier : thickener: water: oil = 5:13.3:1:0.5:0.2:50:30 | 50.0 |
| G | wheat flour : cornstarch : white egg powder: emulsifier : thickener: water: oil = 3:5.3:1:0.5:0.2:50:40 | 50.0 |
| H | wheat flour: cornstarch : white egg powder: emulsifier : thickener: water: oil = 3:5.3:1:0.5:0.2:30:60 | 30.0 |

**[Table 6] Bread crumbs used**

| | Bread crumbs | Water content (%) |
|---|---|---|
| A' | Dry bread crumbs | 8.0 |
| C' | 'Moist bread crumbs | 37.0 |
| D' | Bread crumbs obtained by heating and drying along with salad oil at 180°C | 2.0 |

**[Table 7] Evaluation results of texture of coating**

| | Batter | Bread crumbs | Water content in coating composition (%) | Oil content in batter(%) | Sensory evaluation |
|---|---|---|---|---|---|
| Example 1 | A | A' | 29.0 | 0.0 | 6.7 |
| Example 4 | A | D' | 26.0 | 0.0 | 7.1 |
| Example 5 | D | D' | 26.0 | 0.0 | 7.3 |
| Example 6 | E | D' | 26.0 | 20.0 | 7.7 |
| Example 7 | F | D' | 26.0 | 30.0 | 8.3 |
| Example 8 | G | D' | 26.0 | 40.0 | 8.6 |
| Example 9 | H | D' | 16.0 | 60.0 | 8.7 |
| Comparative Example 8 | B | D' | 39.0 | 0.0 | 5.2 |
| Comparative Example 9 | G | C' | 43.5 | 40.0 | 5.3 |

From Table 7, it can be understood that by adding an oil or fat to the batter liquid, crispness is further improved. Further, by adding an oil or fat at 30% or more, more favorable results were obtained. In addition, by combining bread crumbs obtained by heating bread crumbs along with an oil or fat, further more favorable results were obtained.

## Claims

1. A method for producing a non-fried food, in which a batter liquid and bread crumbs are applied in this order to a food material having undergone a moist-heat treatment, and then the food material is heated by superheated steam at 230 to 250°C, **characterized in that** a water content in a coating composition (the batter liquid and the bread crumbs) before heating is maintained at 33% by weight or less.

2. The method for producing a non-fried food according to claim 1, **characterized in that** a water content in the batter liquid is maintained at 63% or less and a water content in the bread crumbs is maintained at 20% by weight or less.

3. The method for producing a non-fried food according to claim 2, **characterized in that** an oil or fat content in the batter liquid prepared by adding an oil or fat is 30% by weight or more.

4. The method for producing a non-fried food according to claim 3, **characterized in that** the water content in the bread crumbs has been decreased to 20% by weight or less by previously heating and drying the bread crumbs along with an oil or fat.

5. The method for producing a non-fried food according to claim 1, **characterized in that** the moist-heat treatment of the food material comprises heating the food material until the temperature of a center portion of the food material reaches 55 to 60°C.

6. The method for producing a non-fried food according to claim 1, **characterized in that** the coating composition is prepared by mixing the bread crumbs with the batter such that the weight ratio of the bread crumbs to the batter is from 0.5 to 2.5.

7. The method for producing a non-fried food according to claim 1, **characterized in that** a treatment time at 230 to 250°C when performing heating by superheated steam is from 2 to 4 minutes.

8. The method for producing a non-fried food according to claim 1, **characterized in that** the bread crumbs are oil- or fat-containing bread crumbs prepared by heating bread crumbs along with an oil or fat and adjusting a water content therein to 2% or less.

9. The method for producing a non-fried food according to claim 1, **characterized in that** a water content in the coating composition (the batter liquid and the bread crumbs) before heating is maintained at 29% by weight or less.
